# EUROPÄISCHE PATENTANMELDUNG

(11) **EP 2 194 246 A2**
(43) Veröffentlichungstag der Anmeldung: **09.06.2010**
(21) Anmeldenummer: 09176817.6
(22) Anmeldetag: 24.11.2009
(51) Int. Cl.: F01M 9/02, F16N 39/00

(54) **Vorrichtung zur Stabilisierung eines Betriebsfluides für Kraftfahrzeuge**

(30) Priorität: 03.12.2008 DE 102008044306
(71) Anmelder: Robert Bosch GmbH, 70442 Stuttgart (DE)
(72) Erfinder: Genssle, Andreas, 70771, Musberg (DE); Gloeckle, Markus, 70192, Stuttgart (DE); Eppinger, Dieter, 73265, Dettingen (DE); Hernier, Markus, 70839, Gerlingen (DE)

(57) **Zusammenfassung**

Es wird eine Vorrichtung zur Stabilisierung eines Betriebsfluides für Kraftfahrzeuge mit einem Mittel (28) zur Ansteuerung einer das Betriebsmittel in einem betriebsmittelführenden System umwälzenden Vorrichtung beschrieben.

Erfindungsgemäß ist vorgesehen, dass das Mittel zur Ansteuerung einer das Betriebsmittel in einem betriebsmittelführenden System (10) umwälzenden Vorrichtung so ausgeführt ist, dass das Mittel (28) die Vorrichtung zur Umwälzung des Betriebsmittels auch während einer Stillstandphase des Kraftfahrzeugs ansteuert.

## Beschreibung

Die vorliegende Erfindung bezieht sich auf eine Vorrichtung zur Stabilisierung eines Betriebsfluides für Kraftfahrzeuge, auf ein System diese enthaltend sowie auf ein Verfahren zur Stabilisierung eines Betriebsfluides für Kraftfahrzeuge gemäß dem Oberbegriff der unabhängigen Patentansprüche.

### Stand der Technik

Da fossile Energieträger für eine Nutzung nur in begrenztem Umfang zur Verfügung stehen, enthalten heute handelsübliche Kraftstoffe Beimischungen von Kraftstoffkomponenten biologischen Ursprungs. Deren Bedeutung wächst auch im Hinblick auf die in der Diskussion immer wichtiger werdende Einsparung von Kohlendioxidemissionen. Hier kommen sogenannte biogene Kraftstoffe vermehrt zur Anwendung, insbesondere wenn deren Einsatz bzw. Verbrennung als aufkommensneutral in Bezug auf entstehendes Kohlendioxid zu bewerten ist.

So werden beispielsweise dem Dieselkraftstoff als biogene Beimischung Ester langkettiger, oftmals ungesättigter Fettsäuren zugesetzt. Weiterhin sind auch rein biogene Kraftstoffe wie beispielsweise der sogenannte Biodiesel bekannt. Bekannte Vertreter dieser biogenen Kraftstoffe stellen beispielsweise Rapsölmethylester (RME) oder Sojabohnenmethylester (SME) dar. Im Bereich der benzinbasierten Kraftstoffe sind gegenwärtig Beimischungen biogenen Ursprungs in Form von Ethanol oder anderen Alkoholen vorgesehen.

Biogene Kraftstoffe unterliegen jedoch verglichen mit rein mineralischen Kraftstoffen einer verstärkten Alterung durch oxidativen Abbau und - im Falle von Estern als biogenen Zusätzen - zusätzlich einer hydrolytischen Spaltung. Als Endprodukte entstehen dabei überwiegend freie Carbonsäuren, die gegenüber metallischen Werkstoffen korrosionsfördernd wirken und die Bildung von Ablagerungen begünstigen.

Aus dem Bereich der Hausenergieversorgung ist die Beimischung von Bioölen zu üblichen Heizölen bekannt, wodurch deren Lagerfähigkeit insbesondere in Gegenwart kupferhaltiger Materialien drastisch reduziert wird.

Ein weiteres Problem ergibt sich aus der Verwendung biogener, langkettiger Ester, da diese sich in Schmierölen und insbesondere im Motoröl von Kraftfahrzeugen anreichern. Eine Ursache für diesen Vorgang ist der relativ hohe, einheitliche Siedepunkt langkettiger Ester und der Ölkomponenten des Motoröls, so dass nur eine geringe Austragrate der langkettigen Ester aus dem Motoröl selbst bei hohen Temperaturen zu beobachten ist.

Zwar werden auch mineralische Kraftstoffbestandteile in das Motoröl eingetragen; diese zeigen jedoch aufgrund ihrer niedrigeren Siedepunkte eine vergleichsweise geringe Verweilzeit im Motoröl. Es verbleiben die biogenen Bestandteile.

Zur Entfernung unerwünschter saurer Bestandteile eines Motoröls ist es beispielsweise aus der EP 0 703 959 bekannt, basische Substanzen in Motoröl führenden Systemen einzusetzen, um unerwünschte Stoffe zu binden bzw. zu zersetzen. Diese werden in das Material eines entsprechenden Ölfilters integriert.

### Offenbarung der Erfindung

Aufgabe der vorliegenden Erfindung ist es, eine Vorrichtung bzw. ein Verfahren zur Verfügung zu stellen, mit dem ein Betriebsfluid, insbesondere für Kraftfahrzeuge oder stationären Enrgiebereitstellungeinheiten wie Hausheizanlagen, Kraft-Wärme-Kopplungssysteme oder Energiegewinnungsanlagen im Kraftwerksbereich, im Dauerbetrieb stabilisiert werden kann.

Die der Erfindung zugrundeliegende Aufgabe wird mittels einer Vorrichtung bzw. mittels eines Verfahrens mit den kennzeichnenden Merkmalen der unabhängigen Patentansprüche in vorteilhafter Weise gelöst.

Dazu umfasst die beanspruchte Vorrichtung ein Mittel zur Ansteuerung einer das Betriebsmittel in einem betriebsmittelführenden System umwälzenden Vorrichtung, wobei das genannte Mittel zur Ansteuerung der umwälzenden Vorrichtung so ausgeführt ist, dass es die Vorrichtung zur Umwälzung des Betriebsmittels auch während einer Stillstandsphase des Kraftfahrzeugs bzw. der stationären Energiebereitstellungseinheit ansteuert.

Der besondere Vorteil dieser Ausführungsform besteht darin, dass insbesondere bei längeren Stillstandszeiten eines Kraftfahrzeugs bzw. einer stationären Energiebereitstellungseinheit eine schleichende Degenerierung von Betriebsfluiden wie beispielsweise Motor- oder Heizölen, Kraftstoffen oder von Brems- bzw. Hydraulikflüssigkeiten eintreten kann. Da üblicherweise während des Stillstandes eines entsprechenden Kraftfahrzeugs bzw. der stationären Energiebereitstellungseinheit keine Umwälzung der genannten Betriebsfluide stattfindet, können diese selbst dann nicht stabilisiert werden, wenn in dem betriebsmittelführenden System an sich eine Vorrichtung zur Absonderung bzw. Adsorption der zur Degenerierung des Betriebsmittels führenden Bestandteile vorgesehen ist.

Ist jedoch während der Stillstandszeit des Kraftfahrzeugs bzw. der stationären Energiebereitstellungseinheit zumindest phasenweise für eine Umwälzung des Betriebsfluides gesorgt, so kommt das gesamte Volumen des Betriebsfluids während der zumindest kurzzeitigen Umwälzung desselben in Kontakt mit einer Vorrichtung zur Adsorption von unerwünschten Bestandteilen des Betriebsfluides. Werden insbesondere Bestandteile des Betriebsfluids, die zu einer frühzeitigen Degenerierung des Betriebsfluides führen, möglichst frühzeitig an einem geeigneten Adsorptionsmittel gebunden und somit immobilisiert, wirkt sich dies positiv auf die Langzeitstabilität des Betriebsfluids aus.

Weitere vorteilhafte Ausführungsformen der vorliegenden Erfindung sind Gegenstand der Unteransprüche.

So ist von Vorteil, wenn das Mittel zur Ansteuerung einer das Betriebsmittel umwälzenden Vorrichtung diese in regelmäßigen Abständen bzw. für einen vorgegebenen Zeitraum aktiviert bzw. abschließend deaktiviert.

Weiterhin ist von Vorteil, wenn ein die Vorrichtung zur Stabilisierung eines Betriebsfluides aufweisendes betriebsmittelführendes System zusätzlich einen Sensor beinhaltet, der beispielsweise ein von der Konzentration eines unerwünschten Bestandteils des Betriebsmittels abhängiges Sensorsignal generiert und dem Mittel zur Ansteuerung der Vorrichtung zur Umwälzung des Betriebsfluides zur Verfügung stellt. Dies ermöglicht die Anpassung der Betriebszeiten der Vorrichtung zur Umwälzung des Betriebsfluids in Abhängigkeit von der Konzentration insbesondere unerwünschter Bestandteile des Betriebsfluids. Diese Anpassung kann gemäß einer vorteilhaften Ausführungsform beispielsweise über ein Kennfeld erfolgen, das in dem bereits genannten Mittel zur Ansteuerung einer Vorrichtung zur Umwälzung des Betriebsfluids hinterlegt ist.

Gemäß einer weiteren vorteilhaften Ausführungsform der vorliegenden Erfindung umfasst das betriebsmittelführende System, in das die beanspruchte Vorrichtung zur Stabilisierung eines Betriebsfluids integriert ist, eine Vorrichtung zur Entfernung von Bestandteilen eines Betriebsfluids, wobei diese beispielsweise in einen Vorratsbehälter für das Betriebsfluid integriert ist. Dabei kann die Vorrichtung zur Entfernung von Bestandteilen des Betriebsfluids beispielsweise als Beschichtung dieses Vorratsbehälters ausgeführt sein oder in geträgerter Form im Vorratsbehälter positioniert sein. Da das überwiegende Volumen des Betriebsmittels sich beispielsweise im Stillstand des Kraftfahrzeugs innerhalb des Vorratsbehälters befindet, ist eine Lokalisierung einer Vorrichtung zur Entfernung unerwünschter Bestandteile des Betriebsfluides in diesem Vorratsbehälter von besonderer Bedeutung.

Gemäß einer besonders vorteilhaften Ausführungsform der vorliegenden Erfindung greift das Mittel zur Ansteuerung einer Vorrichtung zur Umwälzung des Betriebsfluids ersatzweise oder ergänzend auf ein Kennfeld zu, das ausgewählte, einfach zu ermittelnde Betriebsparameter einer das Kraftfahrzeug antreibenden Antriebseinheit bzw. bzw. einer stationären Energiebereitstellungseinheit aufweist, die zur Berechnung der Frequenz und Dauer einer Aktivierung der Vorrichtung zur Umwälzung des Betriebsfluides während einer Stillstandszeit des Kraftfahrzeugs herangezogen werden.

Die erfindungsgemäße Vorrichtung bzw. das Verfahren zum Betrieb derselben eignet sich in vorteilhafter Weise zur Stabilisierung von Betriebsfluiden wie Motor- oder Heizölen, Hydraulikölen, Bremsflüssigkeiten oder Kraftstoffen von Kraftfahrzeugen, Schienenfahrzeugen, hydraulischen Maschinen oder stationären Energiebereitstellungseinheiten.

### Kurze Beschreibung der Zeichnung

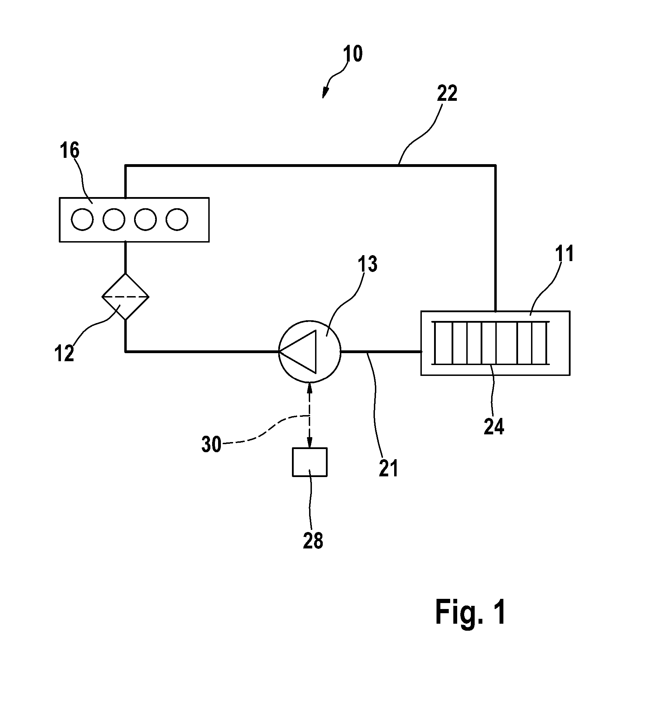

Eine vorteilhafte Ausführungsform der vorliegenden Erfindung ist in der Zeichnung dargestellt und in der nachfolgenden Beschreibung näher erläutert. Es zeigt
- Figur 1: eine schematische Darstellung eines betriebsfluidführenden Systems, in das eine erfindungsgemäße Vorrichtung zur Stabilisierung des Betriebsfluids gemäß einer ersten Ausführungsform integriert ist.

### Beschreibung der Ausführungsbeispiele

Die Anordnung und Funktionsweise einer der Erfindung zugrundeliegenden Vorrichtung zur Stabilisierung eines Betriebsfluids für Kraftfahrzeuge bzw. für stationäre Energiebereitstellungseinheiten wird nachfolgend exemplarisch an einem betriebsölführenden System eines Kraftfahrzeugs erläutert.

So zeigt Figur 1 ein betriebsfluid- bzw. motorölführendes System 10, das beispielsweise eine Ölwanne 11 umfasst. In dieser ist beispielsweise ein Motoröl bevorratet, das über eine Zufuhrleitung 21 einem Verbrennungsmotor 16 zugeführt wird. Dazu wird das Motoröl mittels einer Fluidförderpumpe 13 zur Umwälzung des Betriebsfluids bzw. Motoröls sowie optional mittels einer nicht dargestellten Hochdruckförderpumpe zunächst zu einem Filterelement 12 gepumpt, wobei dieser insbesondere der Entfernung von Feststoffpartikeln, wie sie beispielsweise als mechanischer Abrieb des mit dem Motoröl versorgten Verbrennungsmotors 16 resultieren, dient. Weiterhin umfasst das motorölführende System eine Rückführleitung 22, mit der Motoröl vom Verbrennungsmotor 16 zur Ölwanne 11 zurückgeführt werden kann.

Während des Betriebs des Verbrennungsmotors gelangen Anteile des dem Verbrennungsmotor zugeführten Kraftstoffs in das Motoröl und somit in das motorölführende System 10. Handelt es sich hierbei um Substanzen, die beispielsweise einen niedrigen Siedepunkt aufweisen, so entweichen diese bei höheren Betriebstemperaturen selbstständig.

Handelt es sich jedoch bei den in das Motoröl diffundierenden bzw. gelangenden Kraftstoffbeimengungen um hochsiedende Komponenten insbesondere biogenen Ursprungs, so verbleiben diese während des Betriebs im Motoröl. Dies stellt insofern ein Problem dar, als insbesondere Kraftstoffkomponenten biogenen Ursprungs in Kontakt mit Luftsauerstoff und unter Einwirkung höherer Betriebstemperaturen sich unter Bildung von Carbonsäuren und Ketonen zersetzen.

Die entstehenden Carbonsäuren führen nach Aufzehrung der als Alterungsreserve fungierenden basischen Komponenten des Motoröls zu Korrosionserscheinungen an metallischen Teilen des motorölführenden Systems 10 oder begünstigen Ablagerungen. Ferner ändert sich durch den Kraftstoffeintrag auch das Schmierverhalten des Betriebsfluids und auf diesem Wege auch der volumetrische Füllstand des Betriebsfluids innerhalb des betriebsfluidführenden Systems.

Aus diesem Grund weist das motorölführende System 10 weiterhin eine Vorrichtung 24 zur Entfernung unerwünschter Komponenten des Betriebsfluids bzw. Motoröls auf. Die Vorrichtung 24 ist dabei vorzugsweise innerhalb der Ölwanne 11 positioniert. Sie kann beispielsweise als eine in das Innere der Ölwanne 11 hineinragende Trägerstruktur ausgeführt sein, wie dies beispielhaft in Figur 1 verdeutlicht ist. Auf der Trägerstruktur der Vorrichtung 24 befindet sich ein Adsorptionsmittel für unerwünschte Komponenten des Betriebsfluids bzw. ein Agens zur chemischen Umsetzung derartiger Substanzen.

Alternativ kann die Vorrichtung 24 jedoch auch aus einer Innenbeschichtung der Ölwanne 11 bestehen oder außerhalb der Ölwanne in Kontakt mit der Zufuhrleitung 21 bzw. der Rückführleitung 22 in einem separaten Behältnis angeordnet sein. Als geeignete Trägerstrukturen der Vorrichtung 24 eignen sich beispielsweise gefaltete, gewobene oder gewickelte Oberflächen einschließlich möglicher Gitter- oder Netzstrukturen, die beispielsweise aus Materialien wie Edelstahl, in Kraft- bzw. Schmierstoffen unlöslichen Polymeren oder aus einem keramischen Material gefertigt sind. Ein weiterer großer Vorteil einer Anordnung der Vorrichtung 24 innerhalb der Ölwanne 11 bzw. bei einem kraftstoffführneden System innerhalb eines Kraftstofftanks ist darin zu sehen, dass an dieser Stelle eine Haupteintragsstelle für Sauerstoff und Wasser der Umgebungsatmosphäre in das betriebsfluidführende System gegeben ist.

Die Vorrichtung 24 zur Entfernung unerwünschter Komponenten des Betriebsfluids umfasst weiterhin in ihrem Inneren ein Agens, mittels dem unerwünschte Komponenten des Motoröls bzw. eines Kraftstoffs bei einem kraftstoffführenden System auf chemischem Wege umgesetzt bzw. adsorbiert werden können. Dabei kann es sich sowohl um saure bzw. basische Adsorptionsmedien handeln oder auch um Substanzen, die insbesondere eine sogenannte Crackreaktion der unerwünschten Komponenten und/oder eine chemische Oxidation derselben bewirken.

Unter einer Crackreaktion wird dabei die Spaltung von Kohlenstoff-Kohlenstoffbindungen organischer Moleküle verstanden, wobei es jedoch nicht zu einer Oxidation der organischen Moleküle kommt. Für diesen Zweck ist das Agens beispielsweise als Crackkatalysator ausgeführt, wobei insbesondere Zeolithe zum Einsatz kommen. Speziell eignen sich hier Zeolithe der Gattung H-Erionit, H-ZSM-5 und Y-Zeolithe. Diese sind in Bezug auf ihre Porengröße so eingestellt, dass insbesondere biogene Verunreinigungen des Motoröls, die üblicherweise eine Kettenlänge der zugrunde liegenden Kohlenwasserstoffkette von < 20, insbesondere < 18 Einheiten aufweisen, in das Innere des zeolithischen Materials gelangen können und dort umgesetzt werden.

Demgegenüber werden bei Anwendung in einem motorölführenden System die Hauptbestandteile des Motoröls, die ebenfalls organischer Natur sind und eine Kettenlänge von üblicherweise > 22, insbesondere > 26 Einheiten aufweisen, nicht angegriffen.

Eine weitere Ausführungsform besteht darin, als Agens zur Entfernung unerwünschter Bestandteile eines Betriebsfluids ein Oxidationsmittel einzusetzen, das möglichst selektiv die organischen Verunreinigungen biogenen Ursprungs des Motoröls oxidativ umsetzt, jedoch möglichst nicht zu einer Zersetzung der erwünschten Hauptbestandteile des Motoröls führt. Hier ist insbesondere Kaliumpermanganat geeignet, das insbesondere zur Spaltung von C=C-Doppelbindungen geeignet ist, und das auf einem festen Träger geträgert innerhalb der Vorrichtung 24 vorgesehen ist. Bei einer besonders vorteilhaften Ausführungsform ist das Kaliumpermanganat in den Poren einer Gerüststruktur, wie sie beispielsweise bei Zeolithen, Silikagel oder Clays vorhanden ist, aufgebracht. Bei dieser Ausführungsform wird eine besonders hohe Selektivität bezüglich der oxidativen Spaltung lediglich unerwünschter Bestandteile des Betriebsfluids erreicht.

Mit entsprechend angepasster Porengröße kann weitgehend verhindert werden, dass die verhältnismäßig langkettigen Hauptbestandteile des Motoröls in Kontakt mit dem Oxidationsmittel Kaliumpermanganat kommen; oxidiert werden insbesondere kleinere Moleküle biogenen Ursprungs, die in die Poren eindringen und dort abgebaut werden. Bei der durch das Kaliumpermanganat bewirkten oxidativen Spaltung entstehen Carbonsäuren und gegebenenfalls Ketone sowie Aldehyde. Während Ketone üblicherweise ausreichend niedrige Siedepunkte aufweisen, um bei höheren Betriebstemperaturen selbständig aus dem Motoröl zu entweichen, verbleiben langkettige Carbonsäuren im Betriebsfluid des motorölführenden Systems 10.

Die Herstellung von auf Zeolithen geträgertem Kaliumpermanganat ist beispielsweise dem Artikel S. L. Regen, C. Kotel, J. Am. Chem. Soc. 1977, 99, 3837 - 3838 zu entnehmen.

Gemäß einer weiteren Ausführungsform ist das in der Vorrichtung 24 vorgesehene Agens als basisches bzw. saures Adsorptionsmittel ausgeführt.

In einer bevorzugten Ausführungsform umfasst das Adsorbens ein basisches Adsorbermaterial. An dem basischen Adsorbermaterial werden die sauren Komponenten bzw. das Wasser adsorbiert. Alternativ erfolgt die Abtrennung der aciden Komponenten bzw. des Wassers durch Molekularfiltration mit Hilfe eines Molekularsiebes.

In einer bevorzugten Ausführungsform umfasst das Adsorbens ein strukturvoluminöses, basisches Adsorbermaterial bzw. mindestens eine sterisch gehinderte Base. Diese kann aufgrund ihrer räumlich ausladenden Molekülstruktur nicht mit im Motoröl enthaltenen Estern reagieren. Jedoch sind derartige Verbindungen in der Lage, saure Zersetzungsprodukte der biogenen Kraftstoffe und/oder Wasser zu deprotonieren. Als Träger des strukturvoluminösen, basischen Adsorbermaterials können z.B. vernetztes Polystyrol oder dessen Derivate, wie beispielsweise Divinylbenzol eingesetzt werden. Solche Träger sind in organischen Medien unlöslich.

Besonders geeignete basische Verbindungen als Adsorbens sind polymere Verbindungen. Am besten geeignet sind basische Harze, die neutral oder ionisch aufgebaut sein können.

Wenn schwachsaure, anorganische Materialien als Molekularsieb eingesetzt werden, so können diese zum Beispiel mit starken Basen in ihre basische Form überführt werden. Auf diese Weise modifiziert wirken diese als starkbasische Adsorber.

Weiterhin können als Adsorber auch oberflächenbasifizierte Metalloxide, zum Beispiel basisches Aluminiumoxid, verwendet werden.

Im Sinne der vorliegenden Erfindung besonders geeignet als Adsorbens und/oder Molekularsieb sind alle organischen oder anorganischen Materialien, die basische Oberflächen oder Zentren aufweisen und dadurch acide Komponenten binden.

Wenn zur Abtrennung der biogenen Zersetzungsprodukte, das heißt der aciden Komponenten und/oder des Wassers, ein Molekularsieb eingesetzt wird, so werden hierzu im Allgemeinen anorganische lonentauschermaterialien eingesetzt. Derartige anorganische lonentauschermaterialien sind zum Beispiel Zeolithe, Silikate oder Tonmineralien. Häufig sind die Molekularsiebe als Kationentauscher ausgeführt. Insbesondere ist es bei der Verwendung eines Kationentauschers als Molekularsieb vorteilhaft, wenn sämtliche sauren Zentren des Kationentauschers gegen nicht-acide Kationen ausgetauscht sind. Wenn dies nicht der Fall ist, könnte durch die restliche Acidität des Adsorbermaterials der Abbau des biogenen Kraftstoffes durch Säurekatalyse begünstigt werden.

Weiterhin umfasst das ein Betriebsfluid bzw. ein Motoröl führende System 10 ein Mittel 28 zur Ansteuerung der Fluidförderpumpe 13, wobei das Mittel 28 zur Ansteuerung der Fluidförderpumpe 13 beispielsweise über eine Datenleitung 30 mit der Fluidförderpumpe 13 verbunden ist. Das Mittel 28 zur Ansteuerung der Fluidförderpumpe 13 dient insbesondere der Aktivierung bzw. Passivierung der Fluidförderpumpe 13, beispielsweise über die Steuerung der Stromversorgung der Fluidförderpumpe 13.

Das Mittel 28 zur Ansteuerung der Fluidförderpumpe 13 ist beispielsweise als Steuergerät ausgelegt und dient insbesondere der Ansteuerung der Ölpumpe 13 während der Stillstandszeiten des Verbrennungsmotors 16. Da während eines Stillstands des Verbrennungsmotors 16 keine ausreichende Umwälzung des Betriebsfluids innerhalb des betriebsfluidführenden Systems gewährleistet ist und es somit wie bereits beschrieben zu Degenerationserscheinungen desselben kommen kann, wird mittels des Steuergeräts 28 zeitweilig eine Inbetriebnahme der Fluidförderpumpe 13 veranlasst.

Dabei werden Frequenz und Dauer der Inbetriebnahme der Fluidförderpumpe 13 entweder durch Vorversuche ermittelt oder die Umwälzung des Betriebsfluids erfolgt während des Stillstandes des Verbrennungsmotors 16 in regelmäßigen Abständen zumindest für eine Zeitdauer, die ausreicht, um eine Gesamtumwälzung des Betriebsfluids zu gewährleisten. Auf diese Weise kommt das gesamte Betriebsmittelvolumen in Kontakt mit der Vorrichtung 24 zur Entfernung unerwünschter Bestandteile des Betriebsfluides.

Gemäß einer weiteren Ausführungsform steht das Steuergerät 28 zusätzlich in Kontakt mit einem Sensor zur Erfassung der Konzentration eines Bestandteils des Betriebsfluides. Dieser in Figur 1 nicht dargestellte Sensor ist beispielsweise in physischem Kontakt mit dem Betriebsmittel an der Zufuhrleitung 21 bzw. der Rückführleitung 22 positioniert und steht vorzugsweise in datenleitendem Kontakt mit dem Steuergerät 28. Auf diese Weise kann die Ansteuerung der Ölpumpe 13 durch das Steuergerät 28 in Abhängigkeit von der Konzentration insbesondere unerwünschter Bestandteile des Betriebsfluids vorgenommen werden.

Zu diesem Zweck kann im Steuergerät 28 beispielsweise ein Kennfeld hinterlegt sein, das eine Korrelation einer möglichen Konzentration des unerwünschten Bestandteils im Betriebsfluid mit einer wünschenswerten Betriebsdauer der Fluidförderpumpe 13 während einer Stillstandsphase des Kraftfahrzeugs enthält. Dem liegt die Überlegung zugrunde, dass durch Umwälzung des Betriebsfluides während einer Stillstandsphase des Kraftfahrzeugs durch In-Kontakt-Bringen des Betriebsfluides mit der Vorrichtung 24 eine Verringerung der Konzentration unerwünschter Bestandteile im Betriebsfluid erreicht werden kann.

Die Anwendung der vorbeschriebenen Erfindung ist nicht auf mobile Systeme beschränkt. Sie kann bspw. ebenfalls in stationären Systemen wie bspw. ölbetriebenen Hausenergieanlagen Anwendung finden.

Dabei umfasst dieses beispielsweise einen Öltank, in welchem ein Heizöl bevorratet ist, das über eine entsprechende Zufuhrleitung einer Hausenergieanlage zugeführt wird. Dazu wird das Heizöl mittels einer entsprechenden Fluidförderpumpe zur Umwälzung des Heizöls bspw. zunächst zu einem Filterelement gepumpt, wobei dieses insbesondere der Entfernung von Feststoffpartikeln dient. Weiterhin umfasst das heizölführende System eine Rückführleitung, mit der Heizöl von der Hausenergieanlage zum Öltank zurückgeführt werden kann.

Weiterhin umfasst das ein Heizöl führende System ebenfalls ein Mittel zur Ansteuerung der Fluidförderpumpe, wobei das Mittel zur Ansteuerung der Fluidförderpumpe beispielsweise über eine Datenleitung mit der Fluidförderpumpe verbunden ist. Das Mittel zur Ansteuerung der Fluidförderpumpe dient insbesondere der Aktivierung bzw. Passivierung der Fluidförderpumpe, beispielsweise über die Steuerung der Stromversorgung der Fluidförderpumpe.

Das Mittel zur Ansteuerung der Ölpumpe ist beispielsweise ebenfalls als Steuergerät ausgelegt und dient insbesondere der Ansteuerung der Fluidförderpumpe während der Stillstandszeiten der Hausenergieanlage. Da während eines Stillstands der Hausenergieanlage keine ausreichende Umwälzung des Heizöls innerhalb des heizölführenden Systems gewährleistet ist, wird mittels des Steuergeräts zeitweilig eine Inbetriebnahme der Fluidförderpumpe veranlasst.

Gemäß einer alternativen Ausführungsform wird der vorbestimmte Zeitraum einer Aktivierung der Fluidförderpumpe in Abhängigkeit von Betriebsdaten des Kraftfahrzeugs bzw. der stationären Energiebereitstellungseinheit bemessen. Dazu werden bspw. in einem Kennfeld die Dauer einer möglichen Aktivierung mit Daten korreliert, die bspw. die aktuelle Stillstandszeit bzw. den aktuellen Tankinhalt bzw. die Tankgröße des Kraftfahrzeugs bzw. der stationären Energiebereitstellungseinheit repräsentieren oder die Lager- bzw. Verweilzeit des Fluids im Tank bzw. in der Ölwanne, die Temperaturbelastung oder die Sonnenlichtexposition, insbesondere deren Dauer und Intensität.

Weiterhin können der Alterungszustand des Fluids vor Beginn des Stillstands und während der Stillstandzeit erfasst werden sowie die Art des Fluids, ob es sich bspw. um ein Bioöl oder einen Biodiesel handelt und um deren biogenen Anteil.

Eine Aktivierung erfolgt vorzugsweise, sobald mindestens einer oder bspw. mehrere der hinterlegten Schwellwerte für die hinterlegten Daten überschritten werden. Die für eine Aktivierung bzw. für eine Umwälzung des Betriebsfluids nötige Energie kann bspw. einer Batterie, einem Akkumulator oder einer Photovoltaikeinheit entnommen werden. Eine weitere Möglichkeit besteht im Einsatz von thermoelektrischen Generatoren, die aus Temperaturdifferenzen von Bauteilen eine elektrische Spannung erzeugen.

Die erfindungsgemäße Vorrichtung zur Stabilisierung eines Betriebsfluids kann Anwendung finden in mobilen Systemen wie Kraftfahrzeugen oder Schienenfahrzeugen sowie Baumaschinen als auch in stationären Systemen wie beispielsweise Tankanlagen für Heizöl in Privathaushalten oder in Tanks für Industrieanwendungen sowie in Industriemotoren und Blockheizkraftwerken. Als Betriebsfluide können beispielsweise Heiz- oder Motoröle, Hydrauliköle, Kraftstoffe oder Bremsflüssigkeiten stabilisiert werden. Von besonderem Vorteil ist deren Anwendung bei heizölbetriebenen Hausfeuerungsanlagen, die bspw. nur im Winter der Wärmegewinnung dienen ggf. unter Verzicht auf eine sommerliche Warmwasserbereitung. In diesem Fall sind besonders lange Stillstandszeiten zu beobachten.

## Patentansprüche

1. Vorrichtung zur Stabilisierung eines Betriebsfluides für eine Anlage zur Bereitstellung mechanischer, elektrischer oder thermischer Energie, insbesondere für Kraftfahrzeuge, mit einem Mittel zur Ansteuerung einer das Betriebsmittel in einem betriebsmittelführenden System umwälzenden Vorrichtung, **dadurch gekennzeichnet, dass** das Mittel (28) zur Ansteuerung einer das Betriebsmittel in einem betriebsmittelführenden System (10) umwälzenden Vorrichtung (13) so ausgeführt ist, dass das Mittel (28) zur Ansteuerung einer das Betriebsmittel in einem betriebsmittelführenden System (10) umwälzenden Vorrichtung (13) diese auch während einer Stillstandphase der Anlage zur Bereitstellung mechanischer, elektrischer oder thermischer Energie ansteuert.

2. Vorrichtung nach Anspruch 1, **dadurch gekennzeichnet, dass** das Mittel (28) zur Ansteuerung einer das Betriebsmittel in einem betriebsmittelführenden System (10) umwälzenden Vorrichtung (13) diese in regelmäßigen Abständen aktiviert und deaktiviert.

3. Vorrichtung nach Anspruch 1 oder 2, **dadurch gekennzeichnet, dass** das Mittel (28) zur Ansteuerung einer das Betriebsmittel in einem betriebsmittelführenden System (10) umwälzenden Vorrichtung (13) so ausgeführt ist, dass es zusätzlich ein Sensorsignal verarbeitet, das eine Konzentration eines unerwünschten Bestandteils des Betriebsmittels repräsentiert, und dass es bei Überschreitung einer in einem Kennfeld des Mittels (28) hinterlegten Höchstkonzentration des Bestandteils die das Betriebsmittel in einem betriebsmittelführenden System (10) umwälzende Vorrichtung (13) in im Vergleich kürzeren Intervallen aktiviert oder für jeweils einen längeren Zeitraum.

4. Vorrichtung nach Anspruch 3, **dadurch gekennzeichnet, dass** das Mittel (28) zur Ansteuerung einer das Betriebsmittel in einem betriebsmittelführenden System (10) umwälzenden Vorrichtung (13) ein Steuergerät ist.

5. System zur Versorgung einer Anlage zur Bereitstellung mechanischer, elektrischer oder thermischer Energie, insbesondere einer Antriebseinheit eines Kraftfahrzeugs, mit einem Betriebsmittel, **dadurch gekennzeichnet, dass** ein Mittel (28) zur Ansteuerung einer das Betriebsmittel in einem betriebsmittelführenden System (10) umwälzenden Vorrichtung (13) nach einem der vorhergehenden Ansprüche vorgesehen ist.

6. System nach Anspruch 5, **dadurch gekennzeichnet, dass** eine Vorrichtung (24) zur Entfernung von Bestandteilen eines Betriebsfluides in einen Betriebsmittelvorratsbehälter (11) integriert ist oder diesen bildet.

7. System nach Anspruch 6, **dadurch gekennzeichnet, dass** die Vorrichtung (24) zur Entfernung von Bestandteilen eines Betriebsfluids eine Substanz zur Umsetzung oder Adsorption des Bestandteils als Beschichtung auf der Innenwand des Betriebsmittelvorratsbehälters (11) umfasst.

8. System nach Anspruch 6, **dadurch gekennzeichnet, dass** die Vorrichtung (24) zur Entfernung von Bestandteilen eines Betriebsfluids eine auf einer in das Innere des Betriebsmittelvorratsbehälters (11) hineinragenden Stützstruktur aufgebrachte Substanz zur Umsetzung oder Adsorption des Bestandteils umfasst.

9. System nach einem der Ansprüche 5 bis 8, **dadurch gekennzeichnet, dass** ein in Kontakt mit dem Betriebsmittel stehender Sensor zur Erfassung der Konzentration eines Bestandteils des Betriebsmittels vorgesehen ist.

10. Verfahren zur Stabilisierung eines Betriebsfluides einer Anlage zur Bereitstellung mechanischer, elektrischer oder thermischer Energie, insbesondere eines Kraftfahrzeugs, wobei mittels einer Vorrichtung nach einem der Ansprüche 1 bis 4 zumindest zeitweilig bei einem Stillstand der Anlage zur Bereitstellung mechanischer, elektrischer oder thermischer Energie eine das Betriebsmittel in einem betriebsmittelführenden System (10) umwälzende Vorrichtung (13) für einen vorbestimmten Zeitraum aktiviert wird und/oder für einen zweiten vorbestimmten Zeitraum deaktivert wird.

11. Verfahren nach Anspruch 10, **dadurch gekennzeichnet, dass** der vorbestimmte Zeitraum einer Aktivierung der das Betriebsmittel in einem betriebsmittelführenden System (10) umwälzenden Vorrichtung (13) in Abhängigkeit der Konzentration eines Bestandteils des Betriebsfluid bemessen wird.

12. Verfahren nach Anspruch 10 oder 11, **dadurch gekennzeichnet, dass** der vorbestimmte Zeitraum einer Aktivierung der das Betriebsmittel in einem betriebsmittelführenden System (10) umwälzenden Vorrichtung (13) in Abhängigkeit von Betriebsdaten der Anlage zur Bereitstellung mechanischer, elektrischer oder thermischer Energie bemessen wird.

13. Verwendung einer Vorrichtung nach einem der Ansprüche 1 bis 4, eines Systems nach einem der Ansprüche 6 bis 9 oder eines Verfahrens nach einem der Ansprüche 10 und 11 zur Stabilisierung von Motorölen, Hydraulikölen, Kraftstoffen oder Heizstoffen.
